# EUROPÄISCHE PATENTSCHRIFT

(11) **EP 0 566 005 B1**
(45) Veröffentlichungstag und Bekanntmachung des Hinweises auf die Patenterteilung: **10.01.1996**
(21) Anmeldenummer: 93105706.1
(22) Anmeldetag: 06.04.1993
(51) Int. Cl.: F16D 66/00

(54) **Überhitzungsdetektor für eine Scheibenbremse**
Overheat sensor for a disc brake
Détecteur d'échauffement pour un frein à disque

(30) Priorität: 13.04.1992 DE 4212388
(43) Veröffentlichungstag der Anmeldung: 20.10.1993
(73) Patentinhaber: KNORR-BREMSE SYSTEME FÜR NUTZFAHRZEUGE GmbH, D-80809 München (DE)
(72) Erfinder: Baumgartner, Hans, W-8052 Moosburg (DE)
(74) Vertreter: KUHNEN, WACKER & PARTNER

(56) Entgegenhaltungen:
- EP-A- 0 391 047
- WO-A-92/00212
- DE-A- 3 716 202
- DE-A- 4 024 771

## Beschreibung

Die Erfindung bezieht sich auf einen Überhitzungsdetektor, der für eine Scheibenbremse gemäß dem Oberbegriff des Anspruchs 1 vorgesehen ist. Gegenstand der Erfindung ist ferner ein Verfahren zum Erfassen der Überhitzung einer derartigen Scheibenbremse.

Gattungsgemäße Scheibenbremsen, für die der erfindungsgemäße Überhitzungsdetektor vorgesehen ist, sind allgemein bekannt; derartige Scheibenbremsen weisen in der Regel einen eine Bremsscheibe umfassenden Bremssattel auf, der bei Betätigung einer Zuspannvorrichtung beiderseits der Bremsscheibe angeordnete Bremsbacken gegen diese drückt, wodurch infolge Reibung ein entsprechendes Bremsmoment erzeugt wird. Die Betätigung der Zuspannvorrichtung erfolgt entweder hydraulisch (bei Personenkraftwagen oder teilweise auch bei Omnibussen) oder pneumatisch bzw. mittels Druckluft bei Nutzfahrzeugen. Der erfindungsgemäße Überhitzungsdetektor eignet sich zwar insofern insbesondere für den Einsatz in druckluftbetätigten Scheibenbremsen für Nutzfahrzeuge, als dort das Bremssystem durchschnittlich höheren Belastungen ausgesetzt ist und demzufolge leichter eine Überhitzung, insbesondere bei langen Bergabfahrten ohne EInsatz der Motorbremse, auftreten kann, jedoch kann er selbstverständlich auch für andere Arten von Scheibenbremsen verwendet werden.

Druckluftbetätigte Scheibenbremsen für Nutzfahrzeuge, bei denen, wie erwähnt, der hauptsächliche Nutzen des erfindungsgemäßen Überhitzungsdetektors zu sehen ist, sind beispielsweise aus der **DE-A-3 716 202** sowie aus der nicht vorveröffentlichten **DE-A-4 032 885** bekannt, auf die hier vollinhaltlich bezug genommen sei. Bei diesen bekannten Scheibenbremsen weist die pneumatische Zuspannvorrichtung als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstrekkenden Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei die Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt.

Um das Lüftspiel, d.h. den Abstand der Bremsbacken zur Bremsscheibe im unbetätigten Zustand unter Ausgleich der sich durch Abrieb ändernden Belagstärke konstant zu halten, ist eine Nachstelleinrichtung vorgesehen, die mit jeder Stellspindel drehfest gekoppelt ist und bei jeder Betätigung des Drehhebels jede Stellspindel dann um einen bestimmten Winkel dreht, wenn die Bremsbacke nach Überwindung des Soll-Lüftspiels noch nicht an der Bremsscheibe anliegt. Jede Stellspindel wird folglich von der Nachstelleinrichtung mit zunehmendem Belagverschleiß weiter zur Bremsscheibe hin verschraubt.

Damit der Fahrer jederzeit über die restliche Belagstärke in Kenntnis gesetzt wird, so daß ein ggf. erforderlich werdender Belagwechsel nicht übersehen werden kann, wurde bereits vorgeschlagen, Belagverschleißdetektoren vorzusehen, die mit einer entsprechenden Anzeigeeinrichtung im Fahrerhaus gekoppelt sind. So offenbart die nicht vorveröffentlichte **DE-A-4 041 318** einen von der Nachstelleinrichtung betätigten Drehwinkelsensor, dessen Ausgangssignal als Verschleißmaß ausgewertet wird. Auf diese ältere Anmeldung wird hiermit ausdrücklich verwiesen und vollimhaltlich bezug genommen.

Ebenso ist es bereits bei allen Fahrzeugen üblich, bei jeder Betätigung der Bremse einen entsprechenden Bremssignal-Impuls zu erzeugen, der beispielsweise dazu dient, die Bremslichter anzusteuern. Die hierzu verwendeten Signalgeber sind bekannt und bedürfen daher keiner näheren Erläuterung.

Zur Erhöhung der Betriebssicherheit von mit der gattungsgemäßen Scheibenbremse ausgestatteten Fahrzeugen wurde bereits erwogen, die in der Bremse entwickelte Wärme zu erfassen, so daß bei einem Überhitzungszustand ein Warnsignal abgegeben werden kann, das den Fahrer dazu veranlaßt, die Weiterfahrt bis zum Abkühlen der Bremse ggf. zu unterbrechen. Insbesondere bei Nutzfahrzeugen besteht nämlich, wie eingangs erläutert, durchaus die Gefahr, daß ein noch unerfahrener Fahrer, wie insbesondere bei einer Bergabfahrt, die Bremse zu oft betätigt.

Um dementsprechend die in der Bremse entwickelte Wärme erfassen zu können, wurde beispielsweise in der **DE-A-4 024 771** vorgeschlagen, in der Bremse einen Wärmesensor, z.B. in unmittelbarer Nähe der Bremsscheibe, anzuordnen und das Ausgangssignal dieses Wärmesensors für eine geeignete Warnanzeige auszuwerten, die den Fahrer auf die mögliche Überhitzung der Bremse hinweist und dazu veranlaßt, das Fahrzeug bis zum Abkühlen der Bremse abzustellen. Ein derartiger Wärmesensor erhöht jedoch die Herstellungskosten der Bremse nicht unerheblich, wobei zu beachten ist, daß ebenfalls eine entsprechende Zuleitung zum Fahrerhaus bzw. zu einer Auswertungselektronik vorgesehen werden muß, wodurch die Störanfälligkeit erhöht wird.

In der **WO-A-9 200 212** ist eine Überwachungseinrichtung für mit einem ABS-System und einem ASR-System ausgestattete Fahrzeuge beschrieben, bei dem unter anderem vorgeschlagen wird, die Temperatur der Bremse anhand der momentanen Bremsbeschleunigung, der Ausgangssignale des ABS-Systems und des ASR-Systems sowie unter Berücksichtigung fahrzeugspezifischer Konstanten zu errechnen. Mit dieser bekannten Überwachungseinrichtung ist es möglich, die Temperatur der Bremse ohne einen zusätzlichen Wärmesensor zu bestimmen.

Der Erfindung liegt die Aufgabe zugrunde, einen für eine druckluftbetätigte Scheibenbremse gemäß dem Oberbegriff des Anspruchs 1 geeigneten Überhitzungsdetektor zu schaffen, der sich durch geringe Herstellungskosten auszeichnet und gleichwohl universell verwendbar ist.

Diese Aufgabe wird erfindungsgemäß mit den im Kennzeichnungsteil des Anspruchs 1 angegebenen Maßnahmen gelöst.

Untersuchungen haben überraschend gezeigt, daß das Ausgangssignal eines Belagverschleißdetektors, wie er beispielsweise aus der nicht vorveröffentlichten, eingangs genannten **DE-A-4 041 318** bekannt ist, bei relativ häufiger Betätigung der Bremse innerhalb eines vergleichsweise kurzen Zeitraums trotz des Auftretens von Belagverschleiß dann keine Veränderung zeigt, wenn die Bremse sich stark zu erwärmen beginnt. Dieser Effekt ist vermutlich darauf zurückzuführen, daß sich der Bremsbelag infolge der Wärmeentwicklung so stark ausdehnt, daß die Nachstelleinrichtung trotz des Abriebs des Bremsbelag diesen nicht nachzustellen vermag, da die Wärmeausdehnung den Abrieb offensichtlich kompensiert; erst wenn die Bremse abzukühlen beginnt, tritt eine Nachstellbewegung auf.

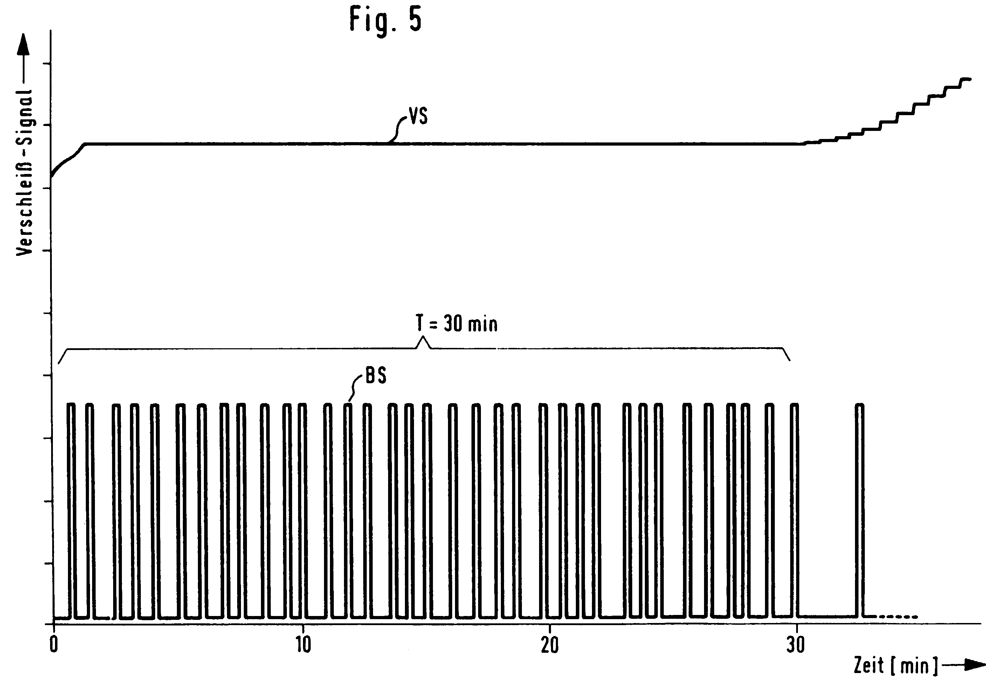

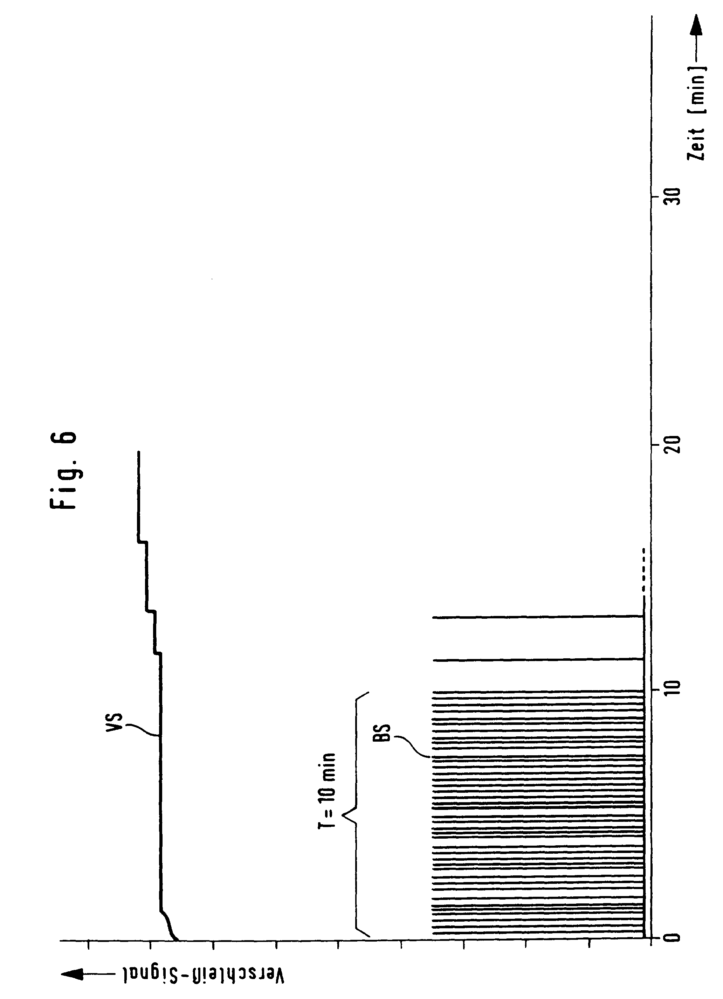

In den Fig. 5 und 6 ist anhand zweier beispielhafter Signalverläufe des Ausgangssignals des Belagverschleißdetektors die empririsch ermittelte Beziehung zur Dauer bzw. Häufigkeit der Bremsbetätigungen aufgetragen. Fig.5 zeigt hierbei den Fall, daß innerhalb eines Zeitraums von ca. 30 Minuten mehr als 30 Bremsbetätigungen auftreten, während Fig.6 den Fall darstellt, daß innerhalb eines Zeitraums von nur ca. 10 Minuten mehr als 40 Bremsbetätigungen auftreten, so daß die Gesamt-Bremsdauer innerhalb des genannten Zeitraums bei einer durchschnittlichen Bremsbetätigungsdauer von angenommen 10 Sekunden in der Gräßenordnung von 5 bis 6 Minuten liegt. In beiden Fällen ist die Bremse am Ende des betreffenden Zeitraums relativ stark erhitzt, wobei sich diese Tatsache nunmehr daran ablesen läßt, daß das Ausgangssignal des Belagverschleißdetektors trotz des bereits aufgetretenen Belagabriebs keine Signalveränderung aufweist.

Die Erfindung macht sich diese Abhängigkeit des Belagverschleißsignals von der aufsummierten Anzahl und Dauer der Bremsbetätigungen pro jeweiligem Zeitraum zunutze und schlägt daher gemäß Kennzeichungsteil von Anspruch 1 vor, eine Auswertungseinrichtung vorzusehen, welche **[a]** das Belagverschleißsignal erfaßt, **[b]** weiterhin alle Bremssignal-Impulse erfaßt und zu einer die gesamte Bremsdauer angebenden Gesamtdauer aufsummiert und **[c]** schließlich immer dann ein Warnsignal erzeugt, wenn die ermittelte Gesamtdauer der Bremssignal-Impulse innerhalb eines vorgebbaren Zeitraums eine vorgebbare Maximaldauer überschreitet, ohne daß innerhalb dieses Zeitraums eine Änderung des Werts des Belagverschleißsignals auftritt. Empirische Untersuchungen an Testfahrzeugen haben bestätigt, daß sich mit diesen Maßnahmen bei geigneter Wahl des vorgegebenen Zeitraums sowie der vorgegebenen Maximaldauer ein zuverlässiges Überhitzungs-Warnsignal erzeugen läßt.

Wie auch aus einem Vergleich der beiden Signalverläufe der Fig.5 und 6 hervorgeht, ist es gemäß Anspruch 2 weiterhin von Vorteil, wenn die Dauer des vorgebbaren Zeitraums umso kürzer eingestellt wird, je höher das durchschnittliche Verhältnis der Impulsdauer der erfaßten Bremssignal-Impulse zur impulsfreien Zeit ist. Hierdurch wird berücksichtigt, daß mit zunehmender Bremsbelastung weniger Zeit zum Abkühlen der Bremse verbleibt.

Gemäß Anspruch 3 kann es darüber hinaus von Vorteil sein, immer dann, wenn am Ende des vorgebbaren Zeitraums oder bei Auftreten einer Änderung des Werts des Verschleißsignals die bis dahin aufsummierte Gesamtdauer der Bremsbetätigungen nur wenig von der jeweils vorgegebenen Maximaldauer entfernt liegt, die Dauer des vorgebbaren Zeitraums um eine vorgebbare Zeitspanne zu verkürzen. Hierdurch kann ggf. berücksichtigt werden, daß in einem solchen Fall bereits eine erhöhte Temperatur der Bremse vorliegt, so daß in der Folge bereits weniger Bremsbetätigungen ausreichen können, um eine Überhitzung der Bremse herbeizuführen. Die Länge der Zeitspanne, um die der vorgebbare Zeitraum verkürzt wird, kann hierbei z.B. in Abhängigkeit von der Differenz der aufsummierten Bremsbetätigungen zu deren vorgegebener Maximaldauer gewählt werden.

Weiterhin ist es gemäß Anspruch 4 ggf. von Vorteil, wenn zusätzlich der Wert des Endstands der gezählten Bremsbetätigungen in Abhängigkeit von dem durchschnittlichen Verhältnis der Impulsdauer der erfaßten Bremssignal-Impulse zur impulsfreien Zeit vorgegeben bzw. geändert wird.

Um eine noch höhere Meßgenauigkeit zu erzielen und insbesondere um sicherzustellen, daß mehrfache Bremsbetätigungen im Stand zu keiner (fehlerhaften) Überhitzungsanzeige führen, ist es gemäß den Ansprüchen 5 bis 7 von Vorteil, wenn bei der Erzeugung des Warnsignals zusätzlich die momentane Fahrgeschwindigkeit und/oder den Bremsdruck oder auch das Produkt hieraus berücksichtigt wird, und zwar vorteilhaft dann, wenn dieser Wert einen bestimmten Grenzwert überschreitet.

Vorteilhafte Maßnahmen zur Realisierung einer bevorzugten Ausführungsform einer Auswertungseinrichtung, mittels der die vorgenannten Wirkungen der Erfindung bei einer mit einem Belagverschleißdetektor ausgerüsteten Bremse erzielt werden können, sind Gegenstand der Ansprüche 8 bis 13.

Bevorzugte Verfahrensschritte zur Durchführung des erfindungsgemäßen Verfahrens zur Erfassung einer Überhitzung sind in den Ansprüchen 17 bis 23 angegeben.

Die Erfindung wird nachstehend anhand der Beschreibung von Ausführungsbeispielen unter Bezugnahme auf die Zeichnung näher erläutert. Es zeigen:
**Fig. 1** anhand eines Querschnitts den schematischen Aufbau der Zuspannvorrichtung einer druckluftbetätigten Scheibenbremse;
**Fig. 2** einen Längsschnitt der in Fig. 1 gezeigten Zuspannvorrichtung;
**Fig. 3** ein vergrößertes Detail der Fig.2 zur Erläuterung des grundsätzlichen Aufbaus und der Funktionsweise eines Belagverschleißdetektors der Zuspannvorrichtung;
**Fig. 4** eine Ausführungsform der erfindungsgemäßen Auswertungseinrichtung; und
**Fig. 5 und 6** den Verlauf eines Ausgangssignals eines von einem Zykloiden-Untersetzungsgetriebe betätigten Drehpotentiometers des Belagverschleißdetektors in bezug zu der Häufigkeit von Bremsbetätigungen.

Um die der Erfindung zugrundeliegende Problematik zu verdeutlichen, sollen zunächst der prinzipielle Aufbau und die Wirkungsweise einer druckluftbetätigten Scheibenbremse und deren Zuspannvorrichtung näher erläutert werden. Wie bereits eingangs erwähnt wurde, ist der erfindungsgemäße Überhitzungsdetektor jedoch bei jeder anderen Art von Scheibenbremse verwendbar, insbesondere auch bei einer hydraulisch betätigten.

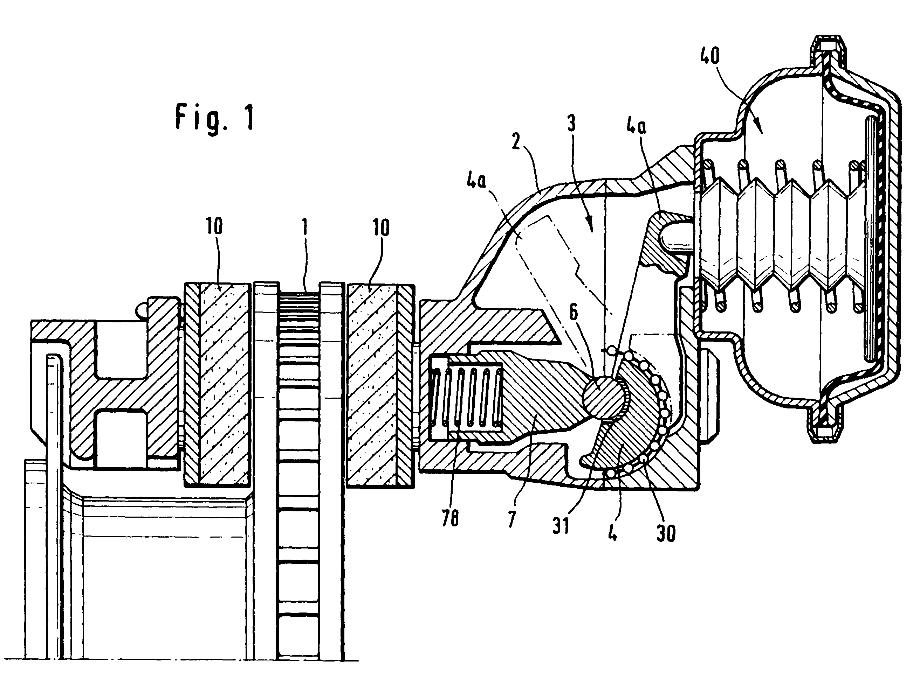

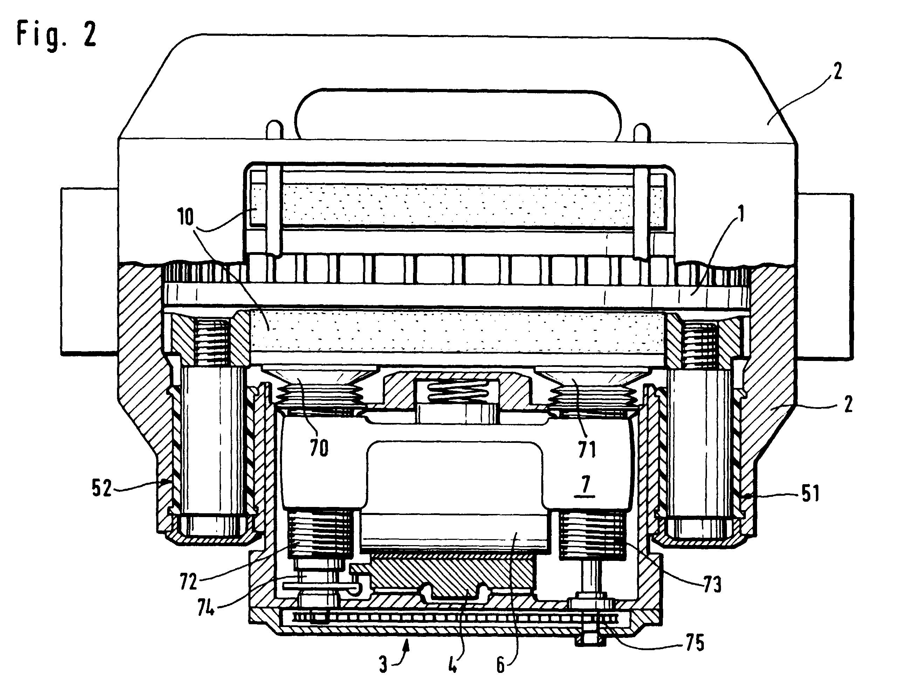

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt, welcher gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert ist. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

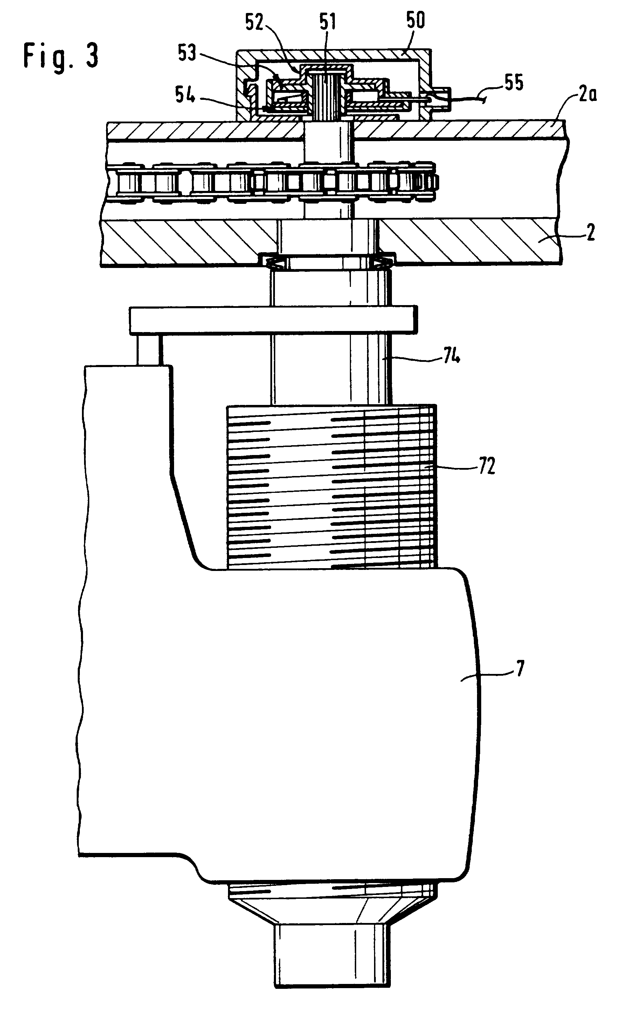

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren in Fig.3 mit 711 bezeichnetes Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an.

Im Inneren der Stellspindel 72 ist eine Nachstelleinrichtung 74 angeordnet, die über eine Axialverzahnung drehfest mit der Stellspindel 72 gekoppelt ist, so daß die axiale Verschiebbarkeit der Stellspindel 72 gewährleistet ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei einer einspindeligen Ausführungsform der Traverse 7, die demzufolge lediglich eine einzige Stellspindel und damit nur ein Druckstück aufweist, wird die Stellspindel beispielsweise in der Mitte der Traverse 7 angeordnet, während der Exzenter 6 sowie die die Druckfeder aufweisende Lagerung der Traverse 7 jeweils in zweifacher Ausfertigung auf beiden Seiten der zentralen Stellspindel vorgesehen sind.

Nachfolgend wird das Arbeitsprinzip der Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (dessen Sollwert in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird. Der Sollwert des Gesamt-Lüftspiels beträgt daher ca. 0,8 mm.

Wenn die beiden Bremsbacken 10 im Verlauf des vorstehend erläuterten Zuspannvorgangs um eine vorbestimmte, dem Soll-Lüftspiel entsprechende Strecke verschoben worden sind, wird die Nachstelleinrichtung 74 vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung 74 vorgesehene Rutschkupplung an, so daß die Stellspindel 72 und die mit ihr synchronisierte Stellspindel 73 nicht verstellt werden. Wenn demgegenüber ein zu großes Lüftspiel vorliegt, was beispielsweise nach einem Belagwechsel oder bei zunehmendem Verschleiß der Bremsbacken der Fall ist, werden die Stellspindeln 72 und 73 von der Nachstelleinrichtung 74 um eine bestimmte Strecke gedreht und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt.

Der augenblickliche Betrag des Belagverschleißes wird mittels eines Belagverschleißdetektors erfaßt, dessen genauer Aufbau in Fig.3 gezeigt ist. Demzufolge greift das bremsscheibenabgewandte Ende der Nachstelleinrichtung 74 mittels eines Ritzels 51 in eine entsprechende axiale Innenverzahnung eines Untersetzungsgetriebes 53 derart ein, daß dieses bei jeder Drehbewegung der Nachstelleinrichtung 74 angetrieben wird. Mit dem Abtrieb des Untersetzungsgetriebes 53 ist ein Drehwinkelsensor in Form eines Drehpotentiometers 54 in der Weise gekoppelt, daß ein Schleifer des Drehpotentiometers 54 um einen um den Untersetzungsfaktor des Getriebes 53 verringerten Drehwinkel gedreht wird. Die Kopplung von Untersetzungsgetriebe 53 und Drehpotentiometer 54 ist dabei so justiert, daß der Schleifer in der obersten Stellung der Drehspindel 74 ("volle Belagstärke") die eine Endposition einer Widerstandsbahn berührt, so daß das Drehpotentiometer 54 beispielsweise den niedrigsten Widerstandswert aufweist; andererseits ist das Untersetzungsverhältnis des Getriebes 53 so gewählt, daß der Schleifer in der untersten Stellung der Drehspindel 74 ("Bremsbelag vollständig aufgebraucht") die andere Endposition der Widerstandsbahn berührt, so daß das Drehpotentiometer 54 seinen höchsten Widerstandswert aufweist. Jedoch ist es selbstverständlich auch möglich, das Verhältnis der Widerstandswerte umgekehrt zu wählen.

Das vorzugsweise als Zykloidengetriebe ausgebildete Untersetzungsgetriebe 53 ist in einer Lagerungsvorrichtung 52 gelagert, die das Untersetzungsgetriebe 53 zwar drehfest, jedoch unter Aufrechterhaltung einer Längs- und Querverschiebbarkeit trägt und an einer Gehäuseabdeckung 50 befestigt ist, die gleichzeitig zum Schutz des Belagverschleißdetektors dient.

Das Drehpotentiometer 54 wird über eine Leitung 55 mit einer nicht näher gezeigten Auswertungseinrichtung verbunden, die aus dem momentanen Widerstandswert eine Information über den jeweiligen Wert der Bremsbelagstärke ableitet und ggf. über ein entsprechendes Instrument im Führerhaus anzeigt. Diese Auswertungseinrichtung ist ferner in der Lage, aus dem erfaßten Widerstandswert das momentane Lüftspiel der Bremse zu bestimmen.

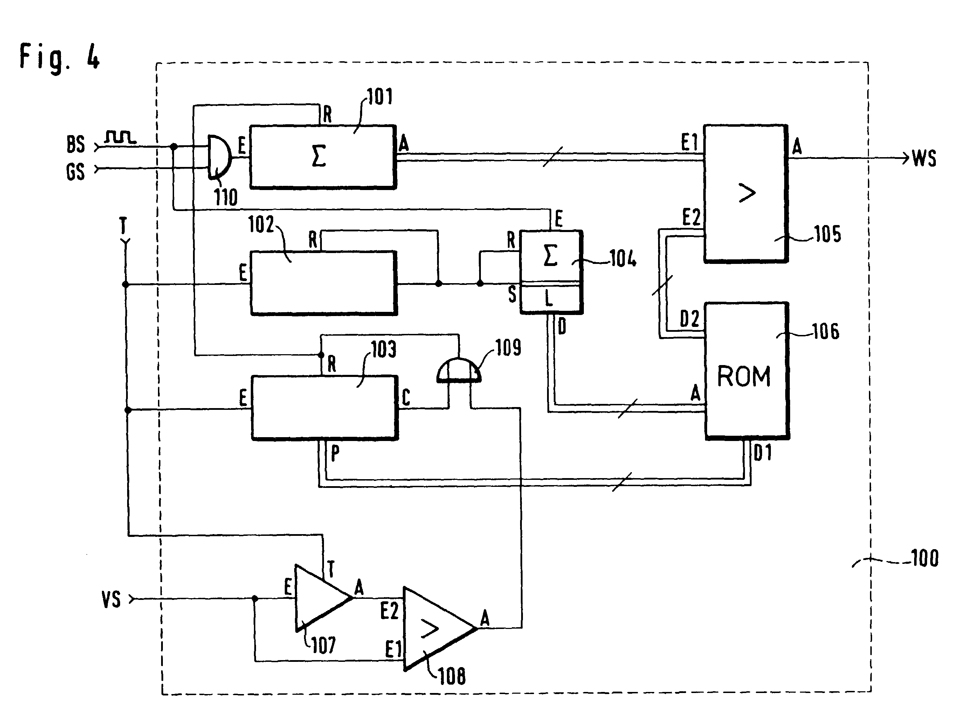

Erfindungsgemäß ist die Leitung 55 des Drehpotentiometers darüber hinaus mit einer weiteren, in Fig.4 näher gezeigten Auswertungseinrichtung 100 verbunden, die als Überhitzungsdetektor dient.

Gemäß Fig. 4 liegt an einem Eingang E einer Abtast/Halte-Schaltung 107 der Auswertungseinrichtung 100 das Ausgangssignal des Drehpotentiometer 54 als ein Verschleißsignal VS an, das beispielsweise dadurch gewonnen werden kann, daß an das Potentiometer 54 eine Referenzspannung angelegt und an dessen Schleifer die sich ergebende Teil spannung abgegriffen wird. Die Abtast/Halte-Schaltung 107 übernimmt den Wert des Verschleißsignals jedesmal dann und gibt diesen als zwischengespeichertes Ausgangssignal an seinem Ausgang A ab, wenn ein an einem Abtasteingang anliegendes Taktsignal T, das beispielsweise eine feste Frequenz von 1 Sekunde aufweisen kann, eine steigende Flanke aufweist. Das Verschleißsignal VS sowie das genannte Ausgangssignal der Abtast/Halte-Schaltung 107 liegen an einem jeweiligen Eingang El bzw. E2 eines analogen Komparators 108 an, der immer dann ein Signal mit dem logischen Pegel H an seinem Ausgang A abgibt, wenn die zu vergleichenden Eingangssignale ungleich sind. Auf diese Weise wird erreicht, daß der Ausgang A des Komparators 108 immer dann für die Periodendauer des Taktsignals T einen H-Impuls abgibt, wenn eine Pegeländerung des Verschleißsignals VS erfaßt worden ist; zu allen anderen Zeiten, d.h. bei unverändertem Signalpegel, hat das Signal am Ausgang A einen L-Pegel. Der analoge Komparator 108 weist jedoch einen Unempfindlichkeitsbereich in der Weise auf, daß geringfügige Schwankungen des Verschleißsignals VS, die einen vorgegegeben Schwellwert nicht überschreiten, nicht erfaßt werden. Hierdurch ist sichergestellt, daß Rauschen oder ähnliche Signalschwankungen im Verschleißsignal VS die Messung nicht negativ beeinflussen können.

Am Eingang E eines digitalen Summierers 101 liegen über ein UND-Gatter 110 Bremssignal-Impulse BS an, die bei jeder Betätigung der Bremse auftreten; diese Impulse können beispielsweise von dem gleichen Signal abgeleitet werden, das zum Ansteuern der Bremsleuchten vorgesehen ist, wobei ggf. ein zusätzlicher Impulsformer wie ein Schmitt-Trigger und/oder ein Monoflop vorgesehen werden kann. Der aktuelle Zählwert des Summierers 101, der demnach die summierte oder integrierte Dauer aller Bremsbetätigungen seit Beginn der Summierung angibt, wird vom Ausgang A des Summierers 101 einem ersten Eingang E1 eines digitalen Komparators 105 zugeführt. An einem zweiten Eingang E2 des Komparators 105 liegt ein Vergleichswert an, der von einem Ausgang D2 eines Festwertspeichers 106 abgegeben wird und eine jeweils vorgegebene Maximaldauer der Bremsbetätigungen bzw. der Gesamt-Bremszeit darstellt. Wenn diese Maximaldauer (E2) von der aktuellen (E1) Bremsdauer überrundet wird, gibt der digitale Komparator ein Warnsignal WS mit einem H-Pegel ab, das von einer nachfolgenden, nicht näher gezeigten Einrichtung in Form einer optischen oder akustischen Meldung zur Anzeige gebracht werden kann.

Am Eingang E eines Zählers 102 liegt ebenfalls das genannte Taktsignal T an, wobei der Zähler 102 einen fest vorgegebenen End-Zählwert aufweist, der unter Berücksichtugung der Frequenz des Taktsignals T so gewählt ist, daß die Zähldauer genau eine Minute beträgt. Nach Ablauf dieser Zeit tritt am Ausgang des Zählers 102 ein H-Impuls auf, der den Zähler über einen Rücksetzeingang R wieder zurücksetzt, so daß dieser erneut zu zählen beginnt. Hierdurch wird ein 1-Minuten Zeitgeber gebildet, dessen im Abstand von jeweils 1 Minute auftretende Taktimpulse an Eingängen R und S eines digitalen Summierers 104 anliegen. An einem Eingang E des Summierers 104 liegen ebenfalls die Bremssignal-Impulse BS an; der Summierer 104 hat darüber hinaus einen Ausgangsspeicher bzw. ein Latch L, das immer dann, wenn am Eingang S ein Impuls anliegt, den momentanen Zählstand speichert und als Ausgangswert an einem Ausgang D abgibt. Dadurch, daß die 1-Minuten-Taktimpulse des Zeitgebers 102 sowohl ein Rücksetzen des Zählers 104 über dessen Rücksetzeingang R als auch die genannte Speicherung des letztgültigen Zählstands über den Eingang S bewirken, wird erreicht, daß der vom Zwischenspeicher L abgegebene Wert das durchschnittliche Verhältnis der Impulsdauer der erfaßten Bremssignal-Impulse BS (d.h. der Bremsdauer) zur impulsfreien (bremsungsfreien) Zeit pro Minute angibt. Dieser Wert wird einem Adresseingang A des Festwertspeichers 106 zugeführt.

Zur Ermittlung des Ablaufs des vorgegebenen Zeitraums ist ferner ein Zähler 103 vorgesehen, der gleichfalls die an einem Eingang E anliegenden Impulse des Taktsignals T zählt und somit einen Zeitgeber bildet. Derjenige Zählstand, bei dem an einem Ausgang C des Zählers 103 ein Signal mit einem H-Pegel auftritt, kann mittels eines an einem Voreinstellungs-Eingang P anliegenden Datenwerts eingestellt werden. Somit bestimmt dieser Datenwert, der von einem Ausgang D1 des Festwertspeichers 106 her zugeführt wird, wie groß der für die erfindungsgemäße Auswertung maßgebliche Zeitraum ist.

Der Ausgang C des Zählers bzw. Zeitgebers 103 liegt am ersten Eingang eines ODER-Gatters 109 an, an dessen anderem Eingang das Ausgangssignal des Komparators 108 anliegt. Das Ausgangssignal des ODER-Gatters 109 liegt sowohl an einem Rücksetzeingang R des Zählers 103 als auch an einem entsprechenden Rücksetzeingang R des Summierers 101 an.

In dem Festwertspeicher 106 ist unter jeder Adresse, die von dem am Adresseingang A anliegenden Datenwert, d.h. der durchschnittlichen Bremsdauer pro Minute bestimmt wird, sowohl ein zugeordneter Wert des maßgeblichen Endstands für die Gesamtbremsdauer-Erfassung (Ausgang S2) als auch ein zugeordneter Wert der voreinstellbaren Zeitdauer, nach der der Zeitgeber 103 ein H-Signal abgibt, gespeichert. Durch geeignete, auf empirischen Ermittlungen gestützte Wahl der gespeicherten Werte läßt sich somit eine genaue Erfassung einer Überhitzung der Bremse erzielen. Beispielsweise könnte folgende Tabelle im Festwertspeicher 106 gespeichert werden:

| | | | | | | |
|---|---|---|---|---|---|---|
| Bremsdauer/min (%): | 0 | 10 | 20 | 30 | 40 | 50 |
| Meß-Zeitraum (D1, min): | 30 | 30 | 20 | 10 | 8 | 5 |
| Maximaldauer (D2, s): | 200 | 180 | 180 | 170 | 160 | 150 |

Aus dieser Tabelle ist ersichtlich, daß der erfaßte Maximalwert der Betätigungsdauer nicht sehr stark geändert werden muß; es ist daher ohne wesentliche Einschränkung der Funktionsfähigkeit möglich, hierfür einen konstanten Wert, wie etwa den Wert 170 Sekunden, zu wählen. In diesem Fall kann im digitalen Komparator 105 ein entsprechender fester Vergleichswert vorgegeben sein, so daß der Festwertspeicher 106 nur einen Ausgang aufzuweisen braucht.

Die gezeigte Tabelle kann selbstverständlich um weitere Werte ergänzt werden, jedoch sind die gezeigten sechs Einträge in der Praxis häufig ausreichend. Es ist gleichwohl sicherzustellen, daß bei durchschnittlichen Betätigungshäufigkeiten von mehr als 50% korrekte Ausgangswerte D1 und D2 geliefert werden; diese können den jeweiligen Endwerten 5 bzw. 150 entsprechen.

Nachfolgend wird die Funktionsweise der in Fig.4 gezeigten Schaltung unter weiterer Bezugnahme auf den in Fig.5 gezeigten Belastungsfall näher erläutert, bei dem innerhalb eines betrachteten Zeitraums T von 30 Minuten etwas mehr als 30 Bremsbetätigungen bzw. entsprechende Bremssignal-Impulse BS auftreten, wobei die durchschnittliche Dauer dieser Impulse 10 Sekunden betrage; demzufolge beträgt das durchschnittliche Verhältnis von Bremsbetätigungen zu bremsfreier Zeit ca. 16% beträgt.

Da zu Beginn des in Fig.5 gezeigten Belastungsfalls zunächst eine Pegeländerung des Verschleißsignals VS auftritt (d.h. die Nachstelleinrichtung ist aktiv geworden), erzeugt der analoge Komparator 108 für die Zeitdauer eines Taktsignal-Impulses ein H-Signal, das den Summierer 101 und den Zeitgeber 103 über das ODER-Gatter 109 zurücksetzt. Im Zeitgeber 103 ist nach Maßgabe des ersten Tabellenwerts D1 des Festwertspeichers nunmehr anfänglich eine Zähl-Zeitspanne von 30 Minuten gespeichert, da der vom Summierer 104 ausgegebene Durchschnittswert anfänglich den Wert 0% hat. Ebenso liegt am zweiten Eingang E2 des digitalen Komparators 105 nunmehr zunächst ein Summier-Endstand von 200 Sekunden (Gesamt-Bremsdauer) an.

Nach Ablauf einer Minute hat der Summierer 104 die erste Bremsbetätigung erfaßt, die eine Dauer von 6 Sekunden haben möge, so daß nunmehr als Adresse der Wert "10" am Festwertspeicher 106 anliegt. Gemäß obiger Tabelle wechselt daher der Summier-Endstand des Komparators 105 auf den Wert 180. Es sei angenommen, daß sich im Laufe der folgenden 30 Minuten keine Änderung des durchschnittlichen Belastungsverhältnisses ergibt, so daß die maßgeblichen Grenzwerte gleich bleiben. Wie in Fig.5 angedeutet, hat der Summierer 101 nach Ablauf von 30 Minuten etwas weniger als 30 Bremsbetätigungen erfaßt, so daß der Komparator 105 kein Warnsignal erzeugt, wenn angenommen wird, daß die aufintegrierte Bremszeit etwa 170 Sekunden betrage. In diesem Zustand erzeugt der Zeitgeber 103 den den Ablauf dieser Zeitspanne signalisierenden H-Impuls an seinem Ausgang C, wodurch sowohl dieser Zeitgeber selbst als auch der Summierer 101 über die entsprechenden Rücksetzeingänge R zurückgesetzt werden und wieder von vorne zu zählen bzw. zu summieren beginnen. Würde sich der Pegel des Verschleißsignals VS entgegen der Darstellung der Fig.5 z.B. nach Ablauf von 15 Minuten ändern, so werden der Zeitgeber 103 und der Summierer 101 auf entsprechende Weise bereits zu diesem Zeitpunkt zurückgesetzt.

Bei dem in Fig.6 gezeigten Belastungsfall treten wesentlich höhere Bremsbelastungen auf, nämlich ca. 40 Bremsbetätigungen innerhalb einer Zeitspanne T von nur 10 Minuten; demzufolge zeigt der Ausgang D des Summierers 104 bereits nach kurzer Zeit eine hohe Bremsverhältnis zwischen 30% und 40% an, so daß die für den Zeitgeber 103 maßgebliche Zähl-Zeitspanne zwischen dem Wert 10 und 8 Minuten schwankt (siehe Tabelle), während der für den Komparator maßgebliche Summier-Endstand den Wert 170 oder 160 annimmt. Da innerhalb eines Zeitraums von mehr als 10 Minuten keine Pegeländerung des Verschleißsignals VS erfaßt wird, erfaßt der Komparator noch vor Ablauf von 10 bzw. 8 Minuten das Überschreiten des Grenzwerts von 170 bzw. 160 Sekunden Gesamt-Bremsbetätigungsdauer; demzufolge wird ein Warnsignal WS erzeugt, das eine Überhitzung der Bremse anzeigt.

In Abänderung des in Fig.4 gezeigten Ausführungsbeispiels ist es möglich, den Zeitgeber 103 nicht nach Ablauf der durch den Festwertspeicher 106 vorgegebenen Zeitspanne zurückzusetzen, sondern stattdessen mit einem vorbestimmten Startwert von einigen Minuten zu laden, wobei dieser vorbestimmte Startwert davon abhängig gemacht wird, wie weit die Zählsumme des Summierers 101 beim Auftreten des Ausgangssignals des ODER-Gatters 109 vom am Eingang E2 des Komparators 105 anliegenden Summier-Endstand entfernt war. So liegt bei dem in Fig.5 gezeigten Belastungsfall lediglich eine Differenz von ca. 10 Sekunden vor; demzufolge wäre es denkbar, den Zeitgeber 103 mit einem Startwert von 15 bis 20 Minuten zu laden, so daß die an sich fest vorgegebene Zeitspanne entsprechend verkürzt wird. Die in Fig.4 gezeigte Schaltung kann auf einfache Weise entsprechend abgewandelt werden, indem z.B. ein zusätzlicher Voreinstellungs-Eingang für den Zähler 103 vorgesehen wird, der mit einem in einer weiteren Tabelle gespeicherten Startwert geladen wird, wobei der geeignete Tabellenwert über einen Komparator ausgewählt wird.

Gemäß Fig.4 werden die Bremssignal-Impulse BS dem Eingang des Summierers 101 nicht unmittelbar, sondern über das genannte UND-Glied 110 zugeführt, an dessen anderem Eingang ein Signal GS anliegt. Bei diesem Signal BS kann es sich z.B. um ein Signal handeln, das von einem nicht näher gezeigten Komparator immer dann erzeugt wird, wenn die Geschwindigkeit und/oder der Bremsdruck oder ein aus diesen beiden Werten gebildetes Produkt einen bestimmten Schwellwert überschreitet. Somit wird erreicht, daß der Summierer nur solche Bremsbetätigungen berücksichtigt, die einen bestimmte Bremslast übersteigen; Fehlalarme können somit noch sicherer verhindert werden.

Teile des in Fig.4 gezeigten Schaltungsaufbaus der Auswertungseinrichtung 100 können auch mittels eines Einchip-Mikroprozessors oder desgleichen realisiert werden; insbesondere die logischen Bauelemente, wie die Zähler, Zeitgeber, Summierer, Tabellenwerte und Komparatoren, lassen sich sehr leicht mit den Registern eines Mikrocomputers in Verbindung mit einer entsprechenden Steuerungsroutine realisieren. Falls im jeweiligen Fahrzeug bereits ein Mikrocomputer vorhanden ist, ist es hierbei von Vorteil, wenn in geeigneten Zeitabständen eine entsprechende Interrupt-Routine aufgerufen wird, die jedesmal die erfindungsgemäßen Kriterien für das Vorliegen einer Überhitzung der Bremse prüft und ggf. Alarm auslöst.

Bei der erläuterten Ausführungsform der Zuspannvorrichtung 3 erfolgt die Kraftübersetzung mittels eines drehbar gelagerten Hebels 4, der über einen Exzenter auf eine Traverse 7 einwirkt; das Prinzip der Erfindung ist jedoch selbstverständlich auch bei anderen Zuspannvorrichtungen verwendbar, etwa bei solchen, bei denen die Kraftübersetzung mittels eines Spreizkeils oder einer Kugelrampe erfolgt. Ebenso ist die Erfindung nicht auf die gezeigten Ausführungsformen von Stellspindel und Nachstelleinrichtung beschränkt; die erfindungsgemäße Auswertungseinrichtung kann vielmehr bei allen Arten von Scheibenbremsen, sowohl bei hydraulisch als auch bei pneumatisch betätigten angewandt werden.

## Patentansprüche

1. Überhitzungsdetektor für eine druckluftbetätigte Scheibenbremse, die einen eine Bremsscheibe *(1)* umfassenden Bremssattel *(2)* aufweist, der bei Betätigung einer Zuspannvorrichtung *(3)* beiderseits der Bremsscheibe *(1)* angeordnete Bremsbacken *(10)* gegen diese drückt und ein entsprechendes Bremsmoment erzeugt, wobei eine Nachstelleinrichtung *(74)* das sich infolge Belagverschleiß ändernde Lüftspiel der Bremsbacken *(10)* im wesentlichen konstant hält und mit einem ein Belagverschleißsignal *(VS)* erzeugenden Signalgeber gekoppelt ist, und wobei jede Betätigung der Zuspannvorrichtung *(3)* mit der Erzeugung eines eine entsprechende Impulsdauer aufweisenden Bremssignal-Impulses einhergeht
*gekennzeichnet durch*
eine Auswertungseinrichtung *(100)*, die
◆ das Belagverschleißsignal *(VS)* erfaßt,
◆ alle Bremssignal-Impulse *(BS)* erfaßt und zu einer die gesamte Bremsdauer angebenden Gesamtdauer aufsummiert und
◆ ein Warnsignal erzeugt, wenn die ermittelte Gesamtdauer der Bremssignal-Impulse *(BS)* innerhalb eines vorgebbaren Zeitraums *(T)* eine vorgebbare Maximaldauer überschreitet, ohne daß innerhalb dieses Zeitraums *(T)* eine Änderung des Werts des Belagverschleißsignals *(VS)* auftritt.

2. Überhitzungsdetektor nach Anspruch 1, *dadurch* *gekennzeichnet,* daß die Auswertungseinrichtung *(100)* die Dauer des vorgebbaren Zeitraums *(T)* umso kürzer einstellt, je höher das durchschnittliche Verhältnis der Impulsdauer der erfaßten Bremssignal-Impulse *(BS)* zur impulsfreien Zeit ist.

3. Überhitzungsdetektor nach Anspruch 1 oder 2, *dadurch* *gekennzeichnet,* daß die Auswertungseinrichtung *(100)* die Dauer des vorgebbaren Zeitraums *(T)* um eine vorgebbare Zeitspanne verkürzt, wenn am Ende des vorgebbaren Zeitraums *(T)* oder bei Auftreten einer Änderung des Werts des Ausgangssignals *(VS)* eines Drehwinkelsensors *(54)* die bis dahin aufsummierte Gesamtdauer der Bremssignal-Impulse *(BS)* nur wenig von der jeweils vorgegebenen Maximaldauer entfernt liegt.

4. Überhitzungsdetektor nach einem der Ansprüche 1 bis 3, *dadurch gekennzeichnet,* daß die Auswertungseinrichtung *(100)* den Wert der Maximaldauer der aufsummierten Bremssignal-Impulse *(BS)* in Abhängigkeit von dem durchschnittlichen Verhältnis der Impulsdauer der erfaßten Bremssignal-Impulse *(BS)* zur impulsfreien Zeit ändert.

5. Überhitzungsdetektor nach einem der Ansprüche 1 bis 4, *dadurch gekennzeichnet,* daß die Auswertungseinrichtung *(100)* bei der Erzeugung des Warnsignals die momentane Fahrgeschwindigkeit und/oder den Bremsdruck berücksichtigt.

6. Überhitzungsdetektor nach Anspruch 5, *dadurch gekennzeichnet,* daß die Auswertungseinrichtung *(100)* einen jeweiligen Bremssignal-Impuls *(BS)* nur dann aufsummiert, wenn die Fahrgeschwindigkeit und/oder der Bremsdruck einen bestimmten Grenzwert überschreitet.

7. Überhitzungsdetektor nach Anspruch 6, *dadurch gekennzeichnet,* daß die Auswertungseinrichtung *(100)* einen jeweiligen Bremssignal-Impuls *(BS)* nur dann aufsummiert, wenn das Produkt aus der Fahrgeschwindigkeit und dem Bremsdruck einen bestimmten Grenzwert überschreitet.

8. Überhitzungsdetektor nach einem der Ansprüche 1 bis 7, *dadurch gekennzeichnet,* daß die Auswertungseinrichtung *(100)* einen ersten Zeitgeber *(102)* zur Ermittlung der durchschnittlichen Dauer der Bremssignal-Impulse *(BS),* einen zweiten Zeitgeber *(103)* zur Ermittlung des Ablaufs des vorgebbaren Zeitraums *(T)* sowie einen löschbaren Summierer *(101)* zum Ermitteln der Gesamtdauer der erfaßten Bremssignal-Impulse *(BS)* aufweist.

9. Überhitzungsdetektor nach einem der Ansprüche 1 bis 8, *dadurch gekennzeichnet,* daß die Auswertungseinrichtung *(100)* die im Summierer gebildete Summe *(101)* löscht, wenn der zweite Zeitgeber *(103)* abläuft oder wenn eine Änderung des Werts des Ausgangssignals *(VS)* des Drehwinkelsensors *(54)* auftritt.

10. Überhitzungsdetektor nach einem der Ansprüche 1 bis 9, *dadurch gekennzeichnet,* daß der erste Zeitgeber *(102)* auf eine vorbestimmte Zeitspanne eingestellt ist und nach Ablauf dieser Zeitspanne erneut zu laufen beginnt, wobei ein weiterer Summierer *(104)* ebenfalls die Bremssignal-Impulse *(BS)* aufsummiert und nach Ablauf des ersten Zeitgebers *(102)* unter Zwischenspeicherung der zuletzt ermittelten Summe an seinem Ausgang *(D)* von vorn aufzusummieren beginnt.

11. Überhitzungsdetektor nach einem der Ansprüche 1 bis 10, *dadurch gekennzeichnet,* daß die Auswertungseinrichtung *(100)* eine Änderung des Werts des Ausgangssignals *(VS)* des Drehwinkelsensors *(54)* mittels eines analogen Komparators *(108)* ermittelt, an dem das Ausgangssignal *(VS)* und eine über eine Abtast/Halte-Schaltung *(107)* zwischengespeicherte Form dieses Signals anliegen.

12. Überhitzungsdetektor nach Anspruch 11, *dadurch gekennzeichnet,* daß der analoge Komparator *(108)* einen Unempfindlichkeitsbereich in der Weise aufweist, daß geringfügige Schwankungen des Belagverschleißsignals *(VS)*, die einen vorgebbaren Schwellwert nicht überschreiten, nicht erfaßt werden.

13. Überhitzungsdetektor nach einem der Ansprüche 8 bis 12, *dadurch gekennzeichnet,* daß die Auswertungseinrichtung *(100)* einen digitalen Komparator *(105)* aufweist, an dessen erstem Eingang *(E1)* die Ausgangssumme des Summierers *(101)* und an dessen zweitem Eingang *(E2)* ein die vorgebbare Maximaldauer repräsentierender Datenwert anliegt.

14. Überhitzungsdetektor nach Anspruch 13, *dadurch* *gekennzeichnet,* daß die Auswertungseinrichtung *(100)* einen Festwertspeicher *(106)* aufweist, an dessen Adresseingang *(A)* ein das durchschnittliche Verhältnis der Bremssignal-Impulse *(BS)* zur impulsfreien Zeit repräsentierender Datenwert anliegt und in dem unter jeder Adresse zwei Ausgangs-Datenwerte *(D1, D2)* gespeichert sind, wobei der erste Ausgangs-Datenwert *(D1)* als Zeitzähldauer an einem Voreinstellungs-Eingang *(P)* des zweiten Zeitgebers *(103)* anliegt und wobei der zweite Ausgangs-Datenwert *(D2)* die vorgebbare Maximaldauer der aufsummierten Bremssignal-Impulse *(BS)* repräsentiert.

15. Überhitzungsdetektor nach einem der Ansprüche 1 bis 14, *dadurch gekennzeichnet,* daß die Nachstelleinrichtung *(74)* mit einem Drehwinkelsensor *(54)* gekoppelt ist, dessen Ausgangssignal das Belagverschleißsignal *(VS)* repräsentiert.

16. Überhitzungsdetektor nach einem der Ansprüche 1 bis 15, *dadurch gekennzeichnet,* daß die Auswertungseinrichtung *(100)* eine Recheneinrichtung, vorzugsweise einen Mikroprozessor aufweist.

17. Verfahren zum Erfassen der Überhitzung einer Scheibenbremse gemäß dem Oberbegriff des Anspruchs 1,
*dadurch gekennzeichnet,* daß
◆ ein jeweiliger Belagverschleißwert *(VS)* erfaßt wird,
◆ jede Betätigung der Bremse erfaßt und zu einer die gesamte Bremsdauer angebenden Gesamtdauer aufsummiert wird und daß
◆ ein Warnsignal erzeugt wird, wenn die ermittelte gesamte Bremsdauer innerhalb eines vorgebbaren Zeitraums *(T)* eine vorgebbare Maximaldauer überschreitet, ohne daß innerhalb dieses Zeitraums *(T)* eine Änderung des Belagverschleißwerts erfaßt wird.

18. Verfahren nach Anspruch 17, *dadurch gekennzeichnet,* daß die Dauer des vorgebbaren Zeitraums *(T)* umso kürzer eingestellt wird, je höher das durchschnittliche Verhältnis der Bremsbetätigungsdauer zur bremsungsfreien Zeit ist.

19. Verfahren nach Anspruch 17 oder 18, *dadurch gekennzeichnet,* daß die Dauer des vorgebbaren Zeitraums *(T)* um eine vorgebbare Zeitspanne verkürzt wird, wenn am Ende des vorgebbaren Zeitraums *(T)* oder bei Auftreten einer Änderung des Belagverschleißwerts die bis dahin aufsummierte Gesamtdauer der Bremsbetätigungen nur wenig von der jeweils vorgegebenen Maximaldauer entfernt liegt.

20. Verfahren nach einem der Ansprüche 17 bis 19, *dadurch* *gekennzeichnet,* daß der Wert der Maximaldauer der aufsummierten Gesamtdauer in Abhängigkeit von dem durchschnittlichen Verhältnis der Bremsbetätigungsdauer zur bremsungsfreien Zeit geändert wird.

21. Verahren nach einem der Ansprüche 17 bis 20, *dadurch* *gekennzeichnet,* daß bei der Erzeugung des Warnsignals die momentane Fahrgeschwindigkeit und/oder der Bremsdruck berücksichtigt wird.

22. Verfahren nach Anspruch 21, *dadurch gekennzeichnet,* daß eine jeweilige Bremsbetätigung nur dann aufsummiert wird, wenn die Fahrgeschwindigkeit und/oder der Bremsdruck einen bestimmten Grenzwert überschreitet.

23. Verfahren nach Anspruch 22, *dadurch gekennzeichnet,* daß eine jeweilige Bremsbetätigung nur dann aufsummiert wird, wenn das Produkt aus der Fahrgeschwindigkeit und dem Bremsdruck einen bestimmten Grenzwert überschreitet.

## Claims

1. Overheating detector for a disc brake operated by compressed air, which disc brake has a calliper (2) embracing a brake disc (1), which calliper, upon operation of a brake application device (3), presses brake blocks (10) arranged on both sides of the brake disc (1) against the latter and generates an appropriate braking torque, with an adjusting device (74) keeping the air clearance of the brake blocks (10) substantially constant, the air clearance changing as a consequence of lining wear, and being coupled to a signal transmitter which generates a lining-wear signal (VS), and with each operation of the brake application device (3) being accompanied by the generation of a brake-signal pulse having a corresponding pulse duration, characterized by
an evaluation device (100),
◆ which detects the lining-wear signal (VS),
◆ which detects all brake-signal pulses (BS) and adds them up to a total duration indicating the total braking duration and
◆ which generates a warning signal if the determined total duration of the brake-signal pulses (BS) exceeds a specifiable maximum duration within a specifiable period (T), without there occurring a change of the value of the lining-wear signal (VS) within this period (T).

2. Overheating detector according to claim 1, characterized in that the evaluation device (100) adjusts the duration of the specifiable period (T) so that it becomes shorter, the higher the average ratio of the pulse duration of the detected brake-signal pulses (BS) to the pulse-free time.

3. Overheating detector according to claim 1 or 2, characterized in that the evaluation device (100) shortens the duration of the specifiable period (T) by a specifiable time interval if at the end of the specifiable period (T) or upon the occurrence of a change of the value of the output signal (VS) of an angle of rotation sensor (54) the total duration of the brake-signal pulses (BS) added up to that point is only slightly different to the respectively specified maximum duration.

4. Overheating detector according to one of claims 1 to 3, characterized in that the evaluation device (100) changes the value of the maximum duration of the added brake-signal pulses (BS) in dependence upon the average ratio of the pulse duration of the detected brake-signal pulses (BS) to the pulse-free time.

5. Overheating detector according to one of claims 1 to 4, characterized in that the evaluation device (100) during the generation of the warning signal takes into account the instantaneous speed of travel and/or the brake pressure.

6. Overheating detector according to claim 5, characterized in that the evaluation device (100) only adds a respective brake-signal pulse (BS) if the speed of travel and/or the brake pressure exceeds a certain limiting value.

7. Overheating detector according to claim 6, characterized in that the evaluation device (100) only adds a respective brake-signal pulse (BS) if the product of the speed of travel and the brake pressure exceeds a certain limiting value.

8. Overheating detector according to one of claims 1 to 7, characterized in that the evaluation device (100) has a first timer (102) for determining the average duration of the brake-signal pulses (BS), a second timer (103) to determine the end of the specifiable period (T) and a resettable totalizer (101) for determining the total duration of the detected brake-signal pulses (BS).

9. Overheating detector according to one of claims 1 to 8, characterized in that the evaluation device (100) clears the sum (101) formed in the totalizer if the second timer (103) ends or if there is a change of the value of the output signal (VS) of the angle of rotation sensor (54).

10. Overheating detector according to one of claims 1 to 9, characterized in that the first timer (102) is set to a predetermined time interval and after the end of this time interval begins to run anew, with an additional totalizer (104) likewise adding up the brake-signal pulses (BS) and after the end of the first timer (102), with intermediate storing of the last sum determined at its output (D), begins to add up from the start.

11. Overheating detector according to one of claims 1 to 10, characterized in that the evaluation device (100) determines a change of the value of the output signal (VS) of the angle of rotation sensor (54) by means of an analog comparator (108), to which the output signal (VS) and a form of this signal intermediately stored by way of a sample-and-hold circuit (107) are applied.

12. Overheating detector according to claim 11, characterized in that the analog comparator (108) has an insensitivity range such that slight fluctuations of the lining-wear signal (VS), which do not exceed a specifiable threshold value, are not detected.

13. Overheating detector according to one of claims 8 to 12, characterized in that the evaluation device (100) has a digital comparator (105), to the first input (FOR) of which is applied the output sum of the totalizer (101) and to the second input (E2) of which is applied a data value representing the specifiable maximum duration.

14. Overheating detector according to claim 13, characterized in that the evaluation device (100) has a read-only memory (106), to the address input (A) of which is applied a data value representing the average ratio of the brake-signal pulses (BS) to the pulse-free time, and in which two output data values (D1, D2) are stored under each address, with the first output data value (D1) being applied as a time-counting duration to a presetting input (P) of the second timer (103) and with the second output data value (D2) representing the specifiable maximum duration of the added brake-signal pulses (BS).

15. Overheating detector according to one of claims 1 to 14, characterized in that the adjusting device (74) is coupled to an angle of rotation sensor (54), the output signal of which represents the lining-wear signal (VS).

16. Overheating detector according to one of claims 1 to 15, characterized in that the evaluation device (100) has a calculating device, preferably a microprocessor.

17. Method for detecting the overheating of a disc brake according to the preamble of claim 1,
characterized in that
◆ a respective lining-wear value (VS) is detected,
◆ each operation of the brake is detected and is added up to a total duration indicating the total braking duration and in that
◆ a warning signal is generated if the determined total braking duration exceeds a specifiable maximum duration within a specifiable period (T), without a change of the lining-wear value within this period (T) being detected.

18. Method according to claim 17, characterized in that the duration of the specifiable period (T) is adjusted so that it becomes shorter, the higher the average ratio of the brake-operation duration to the braking-free time.

19. Method according to claim 17 or 18, characterized in that the duration of the specifiable period (T) is shortened by a specifiable time interval if, at the end of the specifiable period (T) or upon the occurrence of a change of the lining-wear value, the total duration of the brake operations added up to that point is only slightly different to the respectively specified maximum duration.

20. Method according to one of claims 17 to 19, characterized in that the value of the maximum duration of the added total duration is changed in dependence upon the average ratio of the brake-operation duration to the braking-free time.

21. Method according to one of claims 17 to 20, characterized in that in the generation of the warning signal the instantaneous speed of travel and/or the brake pressure is taken into consideration.

22. Method according to claim 21, characterized in that a respective brake operation is only added if the speed of travel and/or the brake pressure exceeds a certain limiting value.

23. Method according to claim 22, characterized in that a respective brake operation is only added if the product of the speed of travel and the brake pressure exceeds a certain limiting value.

## Revendications

1. Détecteur d'échauffement d'un frein à disque actionné à l'air comprimé, comportant un étrier de frein (2) qui entoure un disque de frein (1), qui, lors de l'actionnement d'un dispositif de serrage (3), repousse contre le disque de frein (1), des mâchoires de freinage (10) disposées des deux côtés de ce disque et qui produit un couple de freinage correspondant, dans lequel un dispositif de rattrapage de jeu (74) maintient sensiblement constant le jeu au repos des mâchoires (10), qui varie sous l'effet de l'usure des garnitures, et est accouplé à un générateur de signaux qui produit un signal d'usure de garniture (VS), et dans lequel chaque actionnement du dispositif de serrage (3) intervient avec la production d'une impulsion de signal de frein, qui a une durée correspondante,
caractérisé par
un dispositif d'exploitation (100), qui
- détecte le signal d'usure de garniture (VS),
- détecte toutes les impulsions (BS) du signal de frein et les cumule pour former une durée totale indiquant la durée totale de freinage, et
- produit un signal d'avertissement lorsque la durée totale déterminée des impulsions (BS) du signal de frein dépasse, pendant un laps de temps (T) pouvant être prescrit, une durée maximale pouvant être prescrite, sans que pendant ce laps de temps (T) il apparaisse une modification de la valeur du signal d'usure de garniture (VS).

2. Détecteur d'échauffement suivant la revendication 1, caractérisé par le fait que le dispositif d'exploitation (100) règle la durée du laps de temps (T) pouvant être prescrit, à une valeur d'autant plus courte que le rapport moyen de la durée des impulsions détectées (BS) du signal de frein à la durée sans impulsion est grand.

3. Détecteur d'échauffement suivant la revendication 1 ou 2, caractérisé par le fait que le dispositif d'exploitation (100) réduit d'un intervalle de temps pouvant être prescrit la durée du laps de temps (T) pouvant être prescrit, lorsqu'à la fin du laps de temps (T) pouvant être prescrit ou lorsqu'il apparaît une variation de la valeur du signal de sortie (VS) d'un capteur d'angle de rotation (54), la durée totale, cumulée jusqu'alors, des impulsions (BS) du signal de frein n'est que peu éloignée de la durée maximale prescrite.

4. Détecteur d'échauffement suivant l'une des revendications 1 à 3, caractérisé par le fait que le dispositif d'exploitation (100) modifie la valeur de la durée maximale des impulsions cumulées (BS) du signal de frein, en fonction du rapport moyen de la durée des impulsions détectées (BS) du signal de frein à la durée sans impulsion.

5. Détecteur d'échauffement suivant l'une des revendications 1 à 4, caractérisé par le fait que lors de la production du signal d'avertissement, le dispositif d'exploitation (100) tient compte de la vitesse instantanée de déplacement et/ou de la pression de freinage.

6. Détecteur d'échauffement suivant la revendication 5, caractérisé par le fait que le dispositif d'exploitation (100) ne cumule une impulsion (BS) du signal de frein que lorsque la vitesse de déplacement et/ou la pression de freinage dépassent une valeur limite déterminée.

7. Détecteur d'échauffement suivant la revendication 6, caractérisé par le fait que le dispositif d'exploitation (100) ne cumule une impulsion (BS) du signal de frein que lorsque le produit de la vitesse de déplacement par la pression de freinage dépasse une valeur limite déterminée.

8. Détecteur d'échauffement suivant l'une des revendications 1 à 7, caractérisé par le fait que le dispositif d'exploitation (100) comporte une première minuterie (102) servant à déterminer la durée moyenne des impulsions (BS) du signal de frein, une seconde minuterie (103) servant à déterminer la fin du laps de temps (T) pouvant être prescrit, ainsi qu'un additionneur effaçable (101) servant à déterminer la durée totale des impulsions détectées (BS) du signal de frein.

9. Détecteur d'échauffement suivant l'une des revendications 1 à 8, caractérisé par le fait que le dispositif d'exploitation (100) efface la somme (101) formée dans l'additionneur, lorsque le temps de la seconde minuterie (103) est écoulé ou lorsqu'il se produit une modification de la valeur du signal de sortie (VS) du capteur de l'angle de rotation (54).

10. Détecteur d'échauffement suivant l'une des revendications 1 à 9, caractérisé par le fait que la première minuterie (102) est réglée sur un intervalle de temps prescrit et commence à nouveau à fonctionner une fois écoulé cet intervalle de temps, un autre additionneur (104) cumulant également les impulsions (BS) du signal de frein et, après l'écoulement du temps de la première minuterie (102), commence à faire le cumul à partir de zéro moyennant la mémorisation intermédiaire de la somme déterminée en dernier lieu présente à sa sortie (D).

11. Détecteur d'échauffement suivant l'une des revendications 1 à 10, caractérisé par le fait que le dispositif d'exploitation (100) détermine une modification de la valeur du signal de sortie (VS) du capteur d'angle de rotation (54) à l'aide d'un comparateur analogique (108), auquel sont envoyés le signal de sortie (VS) et une forme de ce signal, mémorisée temporairement par l'intermédiaire d'un circuit d'échantillonnage/blocage (107).

12. Détecteur d'échauffement suivant la revendication 11, caractérisé par le fait que le comparateur analogique (108) comporte une plage d'insensibilité de telle sorte que de faibles fluctuations du signal d'usure de garniture (VS), qui ne dépassent un seuil pouvant être prescrit, ne sont pas détectées.

13. Détecteur d'échauffement suivant l'une des revendications 8 à 12, caractérisé par le fait que le dispositif d'exploitation (100) comporte un comparateur numérique (105), à la première entrée (E1) duquel est envoyée la somme de sortie de l'additionneur (101) et à la seconde entrée (E2) duquel est envoyée une valeur de donnée représentant la durée maximale pouvant être prescrite.

14. Détecteur d'échauffement suivant la revendication 13, caractérisé par le fait que le dispositif d'exploitation (100) comporte une mémoire morte (106), à l'entrée d'adresses (A) de laquelle est envoyée une valeur de donnée qui représente le rapport moyen des impulsions (BS) du signal de frein à la durée sans impulsions, et dans laquelle deux valeurs de données de sortie (D1,D2) sont mémorisées à chaque adresse, la première valeur de données de sortie (D1) étant appliquée en tant que durée de comptage temporel, à une entrée de préréglage (P) de la seconde minuterie (103), tandis que la seconde valeur de données de sortie (D2) représente la durée maximale pouvant être prescrite des impulsions cumulées (BS) du signal de frein.

15. Détecteur d'échauffement suivant l'une des revendications 1 à 14, caractérisé par le fait que le dispositif de rattrapage de jeu (74) est couplé à un capteur d'angle de rotation (54), dont le signal de sortie représente le signal d'usure de garniture (VS).

16. Détecteur d'échauffement suivant l'une des revendications 1 à 15, caractérisé par le fait que le dispositif d'exploitation (100) a un dispositif de calcul, de préférence un microprocesseur.

17. Procédé de détection d'échauffement d'un frein à disque suivant le préambule de la revendication 1,
caractérisé par le fait que
- une valeur d'usure de garniture (VS) est détectée,
- chaque actionnement du frein est détecté et cumulé pour former une durée totale indiquant la durée totale de freinage,
- un signal d'avertissement est produit lorsque la durée totale déterminée de freinage dépasse, en un laps de temps (T) pouvant être prescrit, une durée maximale pouvant être prescrite, sans qu'une variation de la valeur d'usure de garniture soit détectée pendant ce laps de temps (T).

18. Procédé suivant la revendication 17, caractérisé par le fait que l'on règle la durée du laps de temps (T) pouvant être prescrit à une valeur d'autant plus faible que le rapport moyen de la durée d'actionnement du frein à la durée sans freinage est grand.

19. Procédé suivant la revendication 17 ou 18, caractérisé par le fait que l'on raccourcit la durée du laps de temps (T) pouvant être prescrit, d'un intervalle de temps pouvant être prescrit lorsqu'à la fin du laps de temps (T) pouvant être prescrit ou lors de l'apparition d'une variation de la valeur d'usure de la garniture, la durée totale, cumulée jusqu'alors, des actionnements du frein n'est que peu éloignée de la durée maximale prescrite.

20. Procédé suivant l'une des revendications 10 à 19, caractérisé par le fait que l'on modifie la valeur de la durée maximale de la durée totale cumulée en fonction du rapport moyen de la durée d'actionnement du frein à la durée sans freinage.

21. Procédé suivant l'une des revendications 17 à 20, caractérisé par le fait que lors de la production du signal d'avertissement, on tient compte de la vitesse instantanée de déplacement et/ou de la pression de freinage.

22. Procédé suivant la revendication 21, caractérisé par le fait que l'on ne cumule un actionnement du frein que lorsque la vitesse de déplacement et/ou la pression de freinage dépassent une valeur limite déterminée.

23. Procédé suivant la revendication 22, caractérisé par le fait que l'on ne cumule un actionnement du frein que lorsque le produit de la vitesse de déplacement par la pression de freinage dépasse une valeur limite déterminée.
